# EUROPÄISCHE PATENTSCHRIFT

(11) **EP 0 639 538 B1**
(45) Veröffentlichungstag und Bekanntmachung des Hinweises auf die Patenterteilung: **05.04.2000**
(21) Anmeldenummer: 94108764.5
(22) Anmeldetag: 08.06.1994
(51) Int. Cl.: C03C 27/10, F24C 15/10

(54) **Verfahren zur Ausbildung einer dauerelastischen, im Demontagefall leicht lösbaren Klebeverbindung**
Method of forming a permanently elastic adhesive bond, which is easily detachable in case of demounting
Méthode pour la formation d'un collage d'élasticité permanente et détachable en cas de démontage

(30) Priorität: 16.08.1993 DE 4327475
(43) Veröffentlichungstag der Anmeldung: 22.02.1995
(73) Patentinhaber: Schott Glas, 55122 Mainz (DE); CARL-ZEISS-STIFTUNG trading as Schott Glas, 55122 Mainz (DE)
(72) Erfinder: Schultheis, Bernd, D-55270 Schwabenheim (DE); Hubert, Stefan, D-55270 Bubenheim (DE); Leroux, Roland, Dr., D-55271 Stadecken-Elsheim (DE); Thürk, Jürgen, Dr., D-55288 Schornsheim (DE); Schaupert, Kurt, Dr., D-65719 Hofheim (DE); Noky, Werner, D-55122 Mainz (DE)

(56) Entgegenhaltungen:
- EP-A- 0 081 426
- EP-A- 0 640 797
- DE-A- 2 819 118
- DE-A- 3 104 114
- DE-A- 3 124 138
- DE-A- 3 501 490
- DE-C- 4 318 854
- GB-A- 2 102 938

## Beschreibung

Die Erfindung betrifft ein Verfahren zur Ausbildung einer dauerelastischen, im Demontagefall leicht lösbaren Klebeverbindung zwischen einer Platte aus Glas oder Glaskeramik und sowohl einem in der Aussparung angeordneten und auf deren Rand als Unterlage aufliegenden Dichtrahmen als auch einem mit dem Dichtrahmen verbundenen Halterahmen, auf dem die Platte ruht, wobei die Haftfestigkeit der Klebeverbindung durch Trennmittel eingestellt wird.

Dauerelastische Verbindungen zwischen Glas, Glaskeramik o. ä. Sprödwerkstoffen untereinander oder mit anderen Werkstoffen werden derzeit üblicherweise mit Silikonklebern realisiert.

Insbesondere werden Glaskeramik-Kochflächen dauerelastisch mittels besonders temperaturbeständigen Silikonklebern in kunststoffbeschichteten Metallrahmen oder Edelstahlrahmen sowohl am Halterahmen, wie auch am Dichtrahmen eingeklebt.

So ist aus der DE 28 19 118 C2 eine beheizbare Fläche, insbesondere Kochfläche, bestehend aus einer Glas- oder Glaskeramikplatte, die durch einen dauerelastischen hitzebeständigen Kleber mit einem Rahmen verbunden ist, bekannt, wobei der Rahmen aus mindestens einem Rahmenprofil und mindestens einem Zusatzprofil besteht, die sich in der Form voneinander unterscheiden, wobei das Zusatzprofil wenigstens teilweise das Rahmenprofil übergreift oder in dieses eingreift und wenigstens teilweise zwischen dem Rahmenprofil und der Glas- oder Glaskeramikplatte angeordnet ist und wobei das Zusatzprofil mit dem Rahmenprofil durch den Kleber verbunden ist.

Diese Art der Verklebung hat sich bisher in der Praxis sehr gut bewährt, aber im Servicefall ist der Austausch einer defekten Kochfläche nur mit hohem zeitlichen, und damit finanziellen Aufwand möglich. Zur Demontage muß nämlich die Kochfläche aus der Verklebung mühsam herausgeschnitten werden.

Auch im Hinblick auf eine spätere Wiederverwertung (Recycling) der Komponenten ist eine saubere, leichte und kostengünstige Trennung der Kochfläche aus dem Rahmen erforderlich, was aber bei der derzeit durchgeführten Art der Verklebung nur mit erheblichem Aufwand möglich ist.

Weiterhin sind bereits auch Kochflächen-Rahmen-Konstruktionen bekannt, bei denen die Kochfläche mit einem rundumlaufenden U-förmigen Gummiprofil lediglich in den Rahmen eingeklemmt ist. Diese Rahmentypen, sogenannte Übergreifrahmen, lassen bereits eine relativ einfache/kostengünstige Demontage zu, besitzen aber den Nachteil, daß sie, wie bei den Einfaßprofilen, eine große Einschränkung in den Designmöglichkeiten zur Folge haben und nicht für die Mehrzahl der derzeit bestehenden Rahmenkonstruktionen geeignet sind.

Aus der DE 31 04 114 C2 ist eine Halterung für eine Platte aus Glas, Glaskeramik oder ähnlichem Material, insbesondere für eine Kochfläche bekannt, mit einem am Rand einer Einhängeöffnung bzw. auf einer Unterlage aufliegenden sichtbaren Dichtrahmen und einem mit dem Dichtrahmen verbundenen Halterahmen, der seinerseits über einen dauerelastischen, hinreichend temperaturstabilen Kleber mechanisch fest und dauerhaft mit der Platte verbunden ist, während der Dichtrahmen über eine Dichtung, wie einem dauerelastischen Kleber oder eine Profilgummi, abdichtend an die Platte anschließt, wobei der Dichtrahmen und der Halterahmen durch wenigstens ein Befestigungselement lösbar miteinander verbunden sind und die Dichtung zwischen Platte und Dichtrahmen lösbar mit dem Dichtrahmen verbunden ist.

Die Kochfläche ist danach im zweiteiligen Rahmen verklebt, wobei das Rahmenoberteil mit der Kochfläche durch verschiedene Verbindungselemente im Rahmenunterteil gehalten wird. Hierzu werden aber spezielle, und sehr aufwendige Rahmenkonstruktionen benötigt.

Ebenso ist aus der DE 31 04 114 C2 bekannt, Kochflächenrahmen mit einer Trennschicht zu versehen, so daß die Kochfläche mit Kleberand aus dem Rahmen herausgedrückt werden kann. Der an der Glaskeramik-Kochfläche anhaftende Kleber verhindert aber die problemlose Wiederverwertbarkeit.

Aufgabe der vorliegenden Erfindung ist es daher, eine kraftschlüssige, dauerelastische, Verbindung zwischen Glas, Glaskeramik sowie anderen Sprödwerkstoffen mit üblichen Rahmenmaterialien vorzustellen, die eine leichte Demontage dieser Werkstoffe aus einer apparativen Gesamtanordnung ermöglicht, wobei die Werkstoffe weitgehend sortenrein, unverschmutzt und frei von Anhaftungen anderer Werkstoffe anfallen sollen.

Insbesondere ist es auch Aufgabe der Erfindung bei Kochflächen-Rahmen-Verklebungen die bisherigen üblichen Rahmensysteme ohne irgendeine Änderung der Konstruktion weiter einsetzten zu können.

Die vorstehenden Aufgaben werden dadurch gelöst, daß Trennmittel zwischen der Klebeverbindung und den dazu in Kontakt stehenden Teilen der Platte im Randbereich der Platte auf deren Unterseite und ggf. auch auf den unteren Bereich der Stirnseiten der Platte, die in Kontakt zur Klebeverbindung stehen, aufgebracht werden.

Zahlreiche Versuche haben belegt, daß die Sicherheit und Gebrauchstauglichkeit der Kochflächen nicht beeinträchtigt wird.

Die derzeit eingesetzten Kleber erreichen eine Haftfestigkeit von mehr als 1N/mm².

Aufgrund der umlaufenden großen Klebeflächen bei bisherigen Verklebungen im Auflagebereich und an den Stirnseiten der Platte von typischerweise 200 bis 300 cm², ergaben sich Klebekräfte, die bei weitem über den eigentlich auftretenden Spannungen infolge unterschiedlicher Wärmedehnung, sowie bei mechanischen Belastungen, wie z. B. Stoßbelastungen, liegen.

Nach dem erfindungsgemäßen Vorschlag ergeben sich Haftfestigkeiten, die bei den thermischen und mechanischen Belastungen immer noch eine große Sicherheitsreserve beinhalten, so daß die Sicherheit und Gebrauchstauglichkeit weiterhin gegeben ist.

Besonders vorteilhaft ist dies, weil dann eine kraftschlüssige, dichte Verbindung nur im Bereich der Kochflächen-Stirnseite erfolgt, die für die Demontage mittels Schneidewerkzeugen im Allgemeinen leicht zugänglich ist.

Vorteilhaft ist auch die Ausführung bei der die Trennschicht vor allem auf der Unterseite der Platte (ca. 10 mm umlaufend) und ggf. teilweise auch auf dem unteren Bereich der Stirnseiten der Platte, die im Kontakt zur Klebeverbindung stehen aufgebracht ist. Im Randbereich wird daher, abhängig von der unbeschichteten Fläche, weiterhin eine noch ausreichend kraftschlüssige, dichte Verklebung erzielt.

Für die Demontage hat dies den Vorteil, daß lediglich mit einem scharfen Messer oder Skalpell die von oben leicht zugängliche Verklebung aufgeschnitten wird. Die Kochfläche läßt sich dann mit relativ geringem Kraftaufwand aus dem Kochflächen-Rahmen-Verbund entfernen, z. B. von unten aus dem Rahmen drücken, oder mit einem Vakuumsauger nach oben abheben. Gegebenenfalls können dazu auch mechanische Hilfsmittel, beispielsweise eine hydraulische Presse, eingesetzt werden.

Dabei können die Trennmittel partiell, insbesondere punktförmig und an bei der Demontage schwer zugänglichen Stellen, wie in den Eckbereichen, aufgebracht werden.

Besonders vorteilhaft ist es, wenn als Trennmittel die auf der Platte ohnehin als Streulichtabdeckung aufgebrachte Unterseitenbeschichtung, meistens eine Schicht auf Basis eines Resinates mit anorganischen Bestandteilen, benutzt wird.

Nach dem Stand der Technik wird bisher streng darauf geachtet, daß diese Unterseitenbeschichtungen im Randbereich der Platte unterbleibt.

In bevorzugter Ausführungsform werden als Trennmittel Silikon-Trennmittel, Wachse, besonders Natur- und Montanwachse, Öle, besonders fette Öle, Standöle oder Sprühöle auf Basis von Mineralölen, Fette, Harze, besonders Natur- und Kunstharze, Lacke, z. B. Gleitlacke, Tenside, besonders anionische oder nichtionische, Alkohole, besonders Polyalkohole wie Polyethylenglykol (PEG), Glycerol, Fettalkohole, Sikkative, Pigmente, Fasern, besonders Kunststoff-Fasern, Whisker, Polyolefine, besonders Polyethylen, halogeniertes Polyethylen, Polypropylen oder Seifen, insbesondere als 2 - 5 %-ige Seifenlauge eingesetzt.

Diesen Beschichtungen ist gemeinsam, daß sie die Glasoberfläche in eine niederenergetische Oberfläche umwandeln. Dadurch wird die Haftung des Klebers definiert herabgesetzt.

Diese Beschichtung soll aus Materialien bestehen, die die optischen Eigenschaften der Glas/Glaskeramikoberfläche nicht stören und aufgrund der geringen Menge den Wiedereinschmelzprozeß der Kochfläche nicht beeinflussen.

Ebenso können als Trennmittel auch selbstklebende, temperaturbeständige Trennfolien (z. B. Acrylatfolien) vor der Verklebung an die Kochfläche angebracht werden. Nach der Demontage können diese verhältnismäßig einfach wieder abgezogen werden.

In einer weiteren Ausführungsform wird als Trennmittel ein Lack, besonders ein Öllack aufgebracht, der bis zur Anwendungsgrenztemperatur der Klebeverbindung, insbesondere bis 180°C eine übliche, nicht reduzierte Haftfestigkeit zwischen der dauerelastischen Klebeverbindung und den dazu in Kontakt stehenden Teilen der Platte gewährleistet, bei Temperaturen über der Anwendungsgrenztemperatur, insbesondere über 300°C seine Eigenschaften aber so ändert, daß keine Haftvermittlung mehr erfolgt.

Zur Demontage braucht dann lediglich der Kochflächen-Rahmen-Verbund bei höherer Temperatur gelagert werden, wobei sich dann die Klebeverbindung von der Kochfläche löst.

Der Öllack kann sich dabei aus Holzöl, Leinöl, Tallöl oder Perillaöl bilden. Weitere mögliche thermosensible Trennmittel sind Polyester- oder Acrylharzlacke, Nitrolacke, Vinylpolyethylen-Lacke, Epoxidharzlacke, PU-Lacke, Melaminlacke, Harnstoff mit Phenolharz, Chlorkautschuklacke, Schwarzlacke oder Asphalt und Bitumen.

Versuche mit einem Sprühlack, der wie oben beschrieben auf die Kochfläche gesprüht und anschließend an Luft getrocknet wurde, zeigten beispielsweise, daß sich der verklebte Kochflächen-Rahmen-Verbund nach ca. 30 min. bei 300°C aufgetrennt hat.

Vorteilhaft ist es, wenn die dauerelastische Klebeverbindung durch eine temperaturbeständige Silikonverbindung ausgebildet wird.

Besonders vorteilhaft ist es, wenn man das Rahmenoberteil eines zweiteiligen Rahmensystems, wie es in der DE 31 26 013 C2 beschrieben ist, mit der oben aufgezeigten Möglichkeit kombiniert. Dies hat den Vorteil, daß eine beschädigte Kochfläche, die im Rahmenoberteil auf o. g. Weise verklebt ist, im Servicefall vor Ort schnell und kostengünstig gegen eine andere Kochfläche , die bereits in ein Austausch-Rahmenoberteil verklebt ist, ausgetauscht werden kann.

Beim Kundendienst kann dann, ggf. mit den o. g. Hilfsmitteln, die beschädigte Kochfläche aus dem Rahmenoberteil herausgetrennt werden.

Die Erfindung wird nachstehend anhand der Figuren und eines daran vorgestellten Ausführungsbeispieles näher erläutert.

Es zeigen:
- Figur 1:: einen Schnitt durch einen erfindungsgemäßen Kochflächen-Rahmen-Verbund, mit Trennschicht.
- Figur 2:: ein weiteres Ausführungsbeispiel mit einer kraftschlüssigen Verbindung nur im Bereich der Kochflächen-Stirnseite.

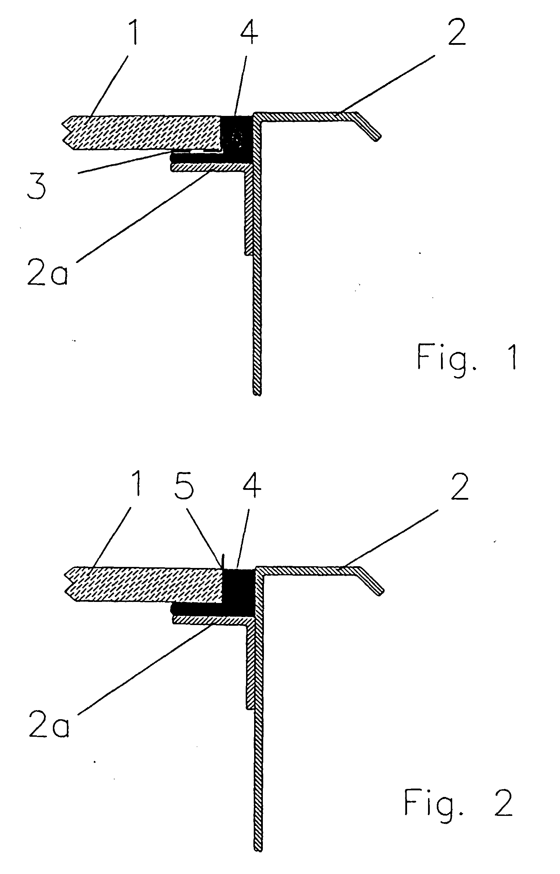

Figur 1 zeigt einen Dichtrahmen (2), der z. B. aus Edelstahl, pulverbeschichtetem Edelstahl, aus emailliertem Stahlblech oder Aluminium-Druckguß bestehen kann und einen damit verbundenen Halterahmen (2a). Für Glaskeramikkochflächen (1) hat der Rahmen (2) typischerweise Abmessungen von etwa 270 x 270 mm bis zu 900 x 560 mm.

Die Trennschicht (3) ist etwa 10 mm umlaufend auf der Unterseite und partiell auch auf den Kantenbereich der Platte (1) aufgebracht.

Als Trennmittel wird dabei auf der Unterseite der Platte (1) eine selbstklebende Trennfolie aus Acrylat aufgebracht, während im Kantenbereich die Platte (1) partiell mit einem Sprühöl auf Basis von Mineralölen behandelt ist.

Die so vorbereitete Platte (1) wird dann auf den vorher mit einer 1 - 2 mm dicken Schicht eines Silikonklebers (4) versehenen Halterahmen (2a) aufgelegt und zentriert, so daß rundumlaufend eine gleichmäßig breite Fuge zum Dichtrahmen (2), vorzugsweise 2,5 ± 1 mm breit, übrig bleibt, die mittels des dauerelastischen Silikonklebers dicht ausgefüllt wird.

Dabei ist zu beachten, daß die Schicht des Silikonklebers (4) auf dem Halterahmen (2a) nicht zu hoch ist, so daß die Kochfläche (1) nicht über die Rahmenoberseite hervorsteht. Bevorzugter Weise schließt die Kochfläche (1) unterhalb der Rahmenoberseite ab und bildet damit ein ausreichendes Volumen für übergelaufenes Kochgut aus.

Zur Demontage müssen nun lediglich die kraftschlüssigen Bereiche der dauerelastischen, dichten Klebeverbindung z. B. mittels eines schaden Messers durchtrennt werden, wobei man hierzu vorteilhafterweise die Stirnseite der Platte (1) als Führung benutzt.

Die Haftfestigkeit zwischen der Unterseite der Platte (1) und der Klebeverbindung ist nach der Erfindung durch das "Trennmittel" Acrylatfolie soweit reduziert, daß die Platte (1) mit nur geringem Aufwand aus dem auf dem Halterahmen (2a) aufgeklebten Silikonbett herausgehebelt oder gedrückt werden kann.

Figur 2 zeigt ein Ausführungsbeispiel, mit einer kraftschlüssigen, dichten Verbindung des dauerelastischen Klebers (4) nur im Bereich der Stirnseite der Kochfläche.

Die Unterseite der Kochfläche (1) ist hier in dem Bereich, in dem sie mit dem Kleber in Verbindung steht, vollständig mit dem Trennmittel Montanwachs versehen.

Nachdem die Platte (1) entlang der Linie (5) von der kraftschlüssigen Verbindung durch den Silikonkleber mit dem Dichtrahmen (2) z. B. mittels einer schaden Klinge getrennt ist, kann die Platte problemlos mit einem Vakuumsauger nach ober, von dem auf dem Halterahmen (2a) aufgeklebten Silikonmaterial abgehoben werden, da wegen des Trennmittels keine feste Haftung zwischen der Unterseite der Platte (1) und dem Silikonkleber (4) besteht.

Die Vorteile der vorliegenden Erfindung:
- Die Kochfläche kann jederzeit leicht, schnell und gut zugänglich aus dem Rahmenverbund von oben durch Aufschneiden der umlaufenden Klebefuge, möglichst direkt an der Platte mit einem scharfen Messer, z. B. einem Teppichmesser oder Skalpell, gelöst und dann entfernt werden.
- Sollten die Stirnseiten der Platten noch kleine Reste von Kleber aufweisen, sind diese sehr leicht durch Abschneiden mit dem Messer zu entfernen.
- Auch der Rahmen kann nach der Demontage der Platte in einfacher Weise von Kleber befreit werden.
- Alle bisherigen und erprobten Kochflächen-Rahmen-Systeme die verklebt werden, können ohne jegliche konstruktive Änderung weiterhin eingesetzt werden.
- Die Möglichkeit der Einstellung einer definierten Haftfestigkeit zwischen Platte und Kleber ist gegeben, bei
- Optimaler Sicherheit und Gebrauchstauglichkeit.

## Patentansprüche

1. Verfahren zur Ausbildung einer dauerelastischen, im Demontagefall leicht lösbaren Klebeverbindung zwischen einer Platte aus Glas oder Glaskeramik (1), und sowohl einem in einer Aussparung angeordneten und auf deren Rand als Unterlage aufliegenden Dichtrahmen (2) als auch einem mit dem Dichtrahmen verbunden Halterahmen (2a), auf dem die Platte ruht, wobei die Haftfestigkeit der Klebeverbindung durch Trennmittel (3) eingestellt wird,
**dadurch gekennzeichnet,**
daß die Trennmittel zwischen der Klebeverbindung (4) und den dazu in Kontakt stehenden Teilen der Platte im Randbereich der Platte auf deren Unterseite und ggf. auch auf den unteren Bereich der Stirnseiten der Platte, die im Kontakt zur Klebeverbindung stehen, aufgebracht werden.

2. Verfahren nach Anspruch 1,
**dadurch gekennzeichnet,**
daß das Trennmittel partiell auf der Unterseite der Platte aufgebracht wird.

3. Verfahren nach den Ansprüchen 1 und 2,
**dadurch gekennzeichnet,**
daß als Trennmittel die auf der Platte, insbesondere als Streulichtabdeckung aufgebrachte Unterseitenbeschichtung, insbesondere eine Schicht auf Basis eines Resinates benutzt wird.

4. Verfahren nach den Ansprüchen 1 und 2,
**dadurch gekennzeichnet,**
daß als Trennmittel Trennfolien, insbesondere selbstklebende, temperaturbeständige Acrylatfolien vorgesehen sind.

5. Verfahren nach den Ansprüchen 1 und 2,
**dadurch gekennzeichnet,**
daß als Trennmittel Silikon-Trennmittel, Wachse, Öle, Fette, Harze, Lacke, Tenside, Alkohole, Sikkative, Pigmente, Fasern, Polyolefine oder Seifen, insbesondere als 2 bis 5 %-ige Seifenlauge eingesetzt werden.

6. Verfahren nach den Ansprüchen 1 und 2,
**dadurch gekennzeichnet,**
daß als Trennmittel ein Lack, insbesondere ein Öllack aufgebracht wird, der bis zur Anwendungsgrenztemperatur der Klebeverbindung, insbesondere bis 180°C eine übliche, nicht reduzierte Haftfestigkeit zwischen der dauerelastischen Klebeverbindung und den dazu in Kontakt stehenden Teilen der Platte gewährleistet, bei Temperaturen über der Anwendungsgrenztemperatur, insbesondere über 300 °C seine Eigenschaften aber so ändert, daß keine Haftvermittlung mehr erfolgt.

7. Verfahren nach den Ansprüchen 1 bis 6,
**dadurch gekennzeichnet,**
daß die dauerelastische Klebeverbindung durch eine temperaturbeständige Silikonverbindung ausgebildet wird.

8. Verfahren nach den Ansprüchen 1 bis 7,
**dadurch gekennzeichnet,**
daß die Platte aus Glas oder Glaskeramik eine Kochfläche in einer Aussparung einer Arbeitsfläche ist.

## Claims

1. Process for the formation of a permanently elastic adhesive bond, which can easily be broken in the event of disassembly, between a glass or glass-ceramic plate (1) and both a sealing frame (2), which is arranged in a recess and rests on the edge thereof as support, and a holding frame (2a), which is connected to the sealing frame and on which the plate rests, where the adhesive strength of the adhesive bond is adjusted by means of release means (3), characterized in that the release means between the adhesive bond (4) and the plate parts in contact therewith are applied in the edge region of the plate to its underside and optionally also to the lower region of the plate faces which are in contact with the adhesive bond.

2. Process according to Claim 1, characterized in that the release means are applied partially to the underside of the plate.

3. Process according to Claims 1 and 2, characterized in that the release means used are the underside coating applied to the plate, in particular as scattered-light mask, in particular a layer based on a resinate.

4. Process according to Claims 1 and 2, characterized in that the release means provided are release films, in particular self-adhesive, heat-resistant acrylate films.

5. Process according to Claims 1 and 2, characterized in that the release means employed are silicone release agents, waxes, oils, fats, resins, paints, surfactants, alcohols, drying agents, pigments, fibres, polyolefins or soaps, in particular as 2 to 5% strength by weight soap solution.

6. Process according to Claims 1 and 2, characterized in that the release means applied is a paint, in particular an oil paint, which guarantees a conventional, non-reduced adhesive strength between the permanently elastic adhesive bond and the plate parts in contact therewith up to the maximum service temperature of the adhesive bond, in particular up to 180°C, but changes its properties at temperatures above the maximum service temperature, in particular above 300°C, in such a way that adhesion is no longer promoted.

7. Process according to Claims 1 to 6, characterized in that the permanently elastic adhesive bond is formed by a heat-resistant silicone compound.

8. Process according to Claims 1 to 7, characterized in that the glass or glass-ceramic plate is a cooking hob in a recess of a worktop.

## Revendications

1. Méthode de formation d'un collage d'élasticité permanente, facilement détachable en cas de démontage, entre une plaque en verre ou en vitrocéramique (1) et non seulement un cadre d'étanchéité (2), disposé dans un évidement et s'appuyant sur son bord en tant qu'appui, mais aussi un cadre de maintien (2a), raccordé au cadre d'étanchéité, sur lequel la plaque repose, la force d'adhérence du collage étant réglée par des agents de séparation (3), caractérisée en ce que les agents de séparation sont appliqués entre le collage (4) et les parties de la plaque qui se trouvent en contact avec cette dernière dans la zone marginale de la plaque sur la face inférieure et, le cas échéant, également sur le domaine inférieur des faces frontales de la plaque, qui sont en contact avec le collage.

2. Méthode selon la revendication 1, caractérisée en ce que les agents de séparation sont appliqués en partie sur la face inférieure de la plaque.

3. Méthode selon les revendications 1 et 2, caractérisée en ce que l'on utilise, en tant qu'agent de séparation, le revêtement de face inférieure appliqué sur la plaque, en particulier en tant que recouvrement de la lumière diffusée, lequel revêtement est en particulier une couche à base d'un savon de résine.

4. Méthode selon les revendications 1 et 2, caractérisée en ce que l'on prévoit, en tant qu'agent de séparation, des feuils de séparation, en particulier des feuils en acrylate auto-adhésifs, résistant à la température.

5. Méthode selon les revendications 1 et 2, caractérisée en ce que l'on utilise, en tant qu'agent de séparation, des agents de séparation aux silicones, des cires, des huiles, des graisses, des résines, des laques, des agents tensioactifs, des alcools, des agents siccatifs, des pigments, des fibres, des polyoléfines ou des savons, en particulier en tant que solutions de savon à raison de 2 à 5 %.

6. Méthode selon les revendications 1 et 2, caractérisée en ce que l'on applique, en tant qu'agent de séparation, une laque, en particulier une laque à l'huile, qui garantit jusqu'à la température limite d'utilisation du collage, en particulier jusqu'à 180°C, une force d'adhérence usuelle, non réduite entre le collage d'élasticité permanente et les parties de la plaque en contact avec cette dernière, tout en modifiant, à des températures au-delà de la température limite d'utilisation, en particulier au-delà de 300°C, ses propriétés de sorte qu'il n'existe plus aucune adhésion.

7. Méthode selon les revendications 1 à 6, caractérisée en ce que le collage d'élasticité permanente est formé par un composé aux silicones résistant à la température.

8. Méthode selon les revendications 1 à 7, caractérisée en ce que la plaque en verre ou en vitrocéramique est une surface de cuisson dans l'évidement d'une surface de travail.
